# EUROPEAN PATENT SPECIFICATION

(11) **EP 2 403 298 B1**
(45) Date of publication and mention of the grant of the patent: **16.03.2016**
(21) Application number: 10168225.0
(22) Date of filing: 02.07.2010
(51) Int. Cl.: H04W 12/06, H04W 12/08, H04L 29/06, H04L 12/54, H04W 48/18

(54) **Method and system for data session establishment**
Verfahren und System zum Datensitzungsaufbau
Procédé et système pour établir une session de données

(43) Date of publication of application: 04.01.2012
(73) Proprietor: BlackBerry Limited, Waterloo, ON N2K 0A7 (CA)
(72) Inventor: Hossain, Asif, Kanata Ontario K2K 3K1 (CA); Ma, David P, Kanata Ontario K2K 3K1 (CA); Chan, Kwong Hang Kevin, Kanata Ontario K2K 3K1 (CA); Lu, Lan, Kanata Ontario K2K 3K1 (CA)
(74) Representative: Moore, Barry

(56) References cited:
- WO-A1-2007/020515
- WO-A1-2009/102368
- US-A1- 2006 104 211
- US-A1- 2010 015 973

## Description

### FIELD OF THE DISCLOSURE

The present disclosure relates to mobile devices and in particular to the establishment of data sessions from the mobile devices.

### BACKGROUND

A Code Division Multiple Access (CDMA) 1x / EVDO hybrid access terminal (mobile device) is a device which operates in a hybrid fashion that supports both CDMA 1x and EVDO radio access technologies (RATs). EVDO stands for Evolution Data Only or Data Optimized and, as suggested by this, is a data only system. EVDO is alternatively known as High Rate Packet Data (HRPD). One advantage of an EVDO system is that it allows a higher transfer rate for data. EVDO networks are also useful to carriers to free CDMA 1x system voice capacity by removing data traffic from the CDMA 1x system.

A mobile device operating in a CDMA 1x / EVDO hybrid mode will first acquire either an EVDO network or a CDMA 1x network, and once this network has been acquired and it is in an idle state the mobile device will then try to acquire an associated 1x network or an associated EVDO network respectively.

In order to acquire the EVDO system, an access network (AN) authentication must occur through an A12 interface. A12 is the interface that carries signaling information related to access authentication between the Session Controls / Mobility Management (SC/MM) functions in the AN and the AN-AAA (Access Network - Authentication, Authorization and Accounting Entity). AN authentication uses a Challenge-Handshake Authentication Protocol (CHAP) to authenticate a mobile device. AN authentication occurs upon the mobile device first attempting to access the access network and establish an initial EVDO session and is repeated after a session timeout or the access network fails to reach the mobile device after a keep alive timer expires. A12 interfaces are described in the Third Generation Partnership Project 2 (3GPP2) A.S0008 specification, the contents of which are incorporated herein by reference.

If AN authentication fails, the mobile device will periodically attempt to connect with the EVDO network to establish an EVDO session. The repetition of connection attempts wastes network resources and battery life on the device since the authentication failure likely signals future authentication failures. In addition, the repeated attempts to authenticate AN may delay data session setup on a CDMA 1x network, potentially resulting in a poor user experience.

Similarly, for devices that support a hybrid mode of other RATs operating under multiple networks, authentication on a first network may fail. Repetition of connection attempts to that network waste resources. For example, a connection to a Long Term Evolution (LTE) network may be attempted, and may fail. Further connection attempts to the LTE network may waste resources and may delay data session setup on networks of different RATs found over the air.

US 2010/0015973 A1 discloses an apparatus and method for making use of black-list network information to make scanning more efficient in multi-mode mobile devices. When performing a scan for a network, if a network that is blacklisted is found, scanning is discontinued for any network that has the same radio access technology as the network that was found.

WO 2007/020515 A1 discloses a method includes receiving location area-related information, associating the location area-related information with a neighbor cell information to determine if a cell belongs to a forbidden location area, and avoiding selection of the cell if the cell is determined to belong to the forbidden location area. Embodiments described include a UE, network element, computer, program product, and integrated circuit.

US 2006/0104211 A1 discloses a method and apparatus for packet data service discovery. A current blacklist comprising entries for wireless networks not providing packet data services (i.e. either not supporting the services or not having a packet data services roaming agreement) is kept in a memory of a mobile device based on previous attempts to connect to such networks.

WO 2009/102368 A1 discloses systems and methods for generating a blacklist for femtocells. According to an embodiment of the application, a mobile device generates and maintains a femtocell blacklist including an identification of at least one femtocell to be avoided by the mobile device. Upon detecting a femtocell, the mobile device determines whether the femtocell is identified in the femtocell blacklist. If the femtocell is identified in the femtocell blacklist, then the mobile device avoids any attempt to use the femtocell.

### SUMMARY

The present teaching provides a method as detailed in claim 1. Also provided is a device in accordance with claim 14. Advantageous features are provided in dependent claims.

### BRIEF DESCRIPTION

The present disclosure will be better understood with reference to the drawings in which:
**Figure 1** is a data flow diagram showing EVDO access network authentication of a mobile device;
**Figure 2** is a flow diagram showing a process for network connection in a multiple networks scenario;
**Figure 3** is a flow diagram showing a process for data session establishment over a hybrid coverage of EVDO and CDMA 1 x;
**Figure 4** is an exemplary blacklist table;
**Figure 5** is a flow diagram showing a process for clearing entries from a blacklist;
**Figure 6** is a block diagram showing exemplary hybrid CDMA 1x / EVDO network; and
**Figure 7** is a block diagram of an exemplary mobile device.

### DETAILED DESCRIPTION

The present disclosure is described below with regard to a CDMA 1x and EVDO. This is however not meant to be limiting and the methods and systems described herein could be equally applied to other radio access technologies (RATs). Such other radio access technologies include, but are not limited to, **E**volved **U**niversal Mobile Telecommunications System **T**errestrial **R**adio **A**ccess **N**etwork (EUTRAN, also referred as Long Term Evolution or LTE), **U**MTS **T**errestrial **R**adio **A**ccess **N**etwork (UTRAN), **G**SM **E**DGE **R**adio **A**ccess **N**etwork (GERAN), among others. The use of CDMA 1x and EVDO below is therefore only for illustrative purposes.

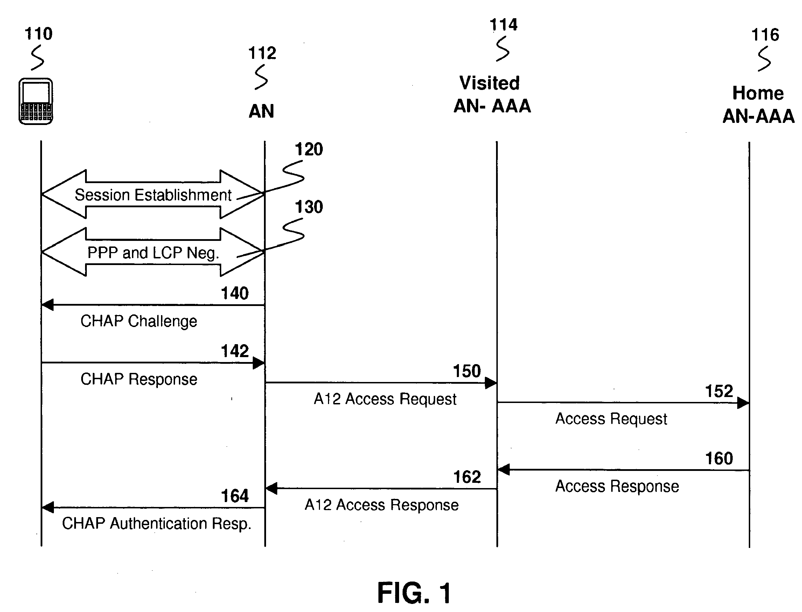

Reference is now made to **Figure 1. Figure 1** shows EVDO access network authentication. In **Figure 1****,** a mobile device **110** communicates with an Access Network (AN) **112,** which in turn communicates with a Visited Access Network AAA **114.** Visited Access Network AAA **114** communicates with a Home Access Network AAA **116.**

A mobile device **110** communicates with Access Network **112** for session establishment, as seen by arrow **120.** A point-to-point protocol (PPP) and link control protocol (LCP) negotiation then occur between the mobile device **110** and the AN **112,** as seen by arrow **130.**

After the PPP and LCP negotiations, AN **112** sends a CHAP challenge **140** to mobile device **110.** In response, mobile device **110** sends CHAP response **142** back to AN **112.** The response **142** is based on the A12 CHAP identifier and includes the A12 network access identifier (NAI) and the CHAP access authentication password.

AN **112** then sends visited access network AAA **114** an A12 access request **150.** A12 access request **150** includes the challenge and response.

Visited access network AAA **114** then uses a network access identifier to forward message **152** to the proper home AN-AAA server **116.**

Home AN-AAA **116** validates the CHAP response and responds with an authorization response as shown by message **160.** The visited access network AAA **114** forwards the response to AN **112,** as shown by message **162.**

The AN **112** then informs the mobile device **110** of the A12 authentication results, as seen by message **164.** As defined in 3GPP2 A.S0008 the result may be A12 access-accept or A12 access-reject.

The access network authentication may result in rejection if, for example, the mobile device is not provisioned by the network to allow EVDO access. For example, a mobile device may be in a roaming network with no home network agreement. Other reasons for authentication failure will be known to those in the art.

Always on mobile devices generally desire the establishment of a data session at the earliest opportunity. The EVDO access network authentication typically coincides with EVDO session set up, and precedes data session setup. Repeated failed attempts at authenticating AN in this scenario delays data session setup, potentially resulting in a poor user experience. For example, the delay in the data session setup may be perceived as a stall in acquiring data services at the mobile device. Further, the repeated attempts to authenticate AN may result in possible battery life impacts since vendors may deploy some sort of EVDO session recovery, which if network provision and conditions do not change, will always fail when attempting AN authentication. In addition, over the air resources may be wasted. Device should therefore find an alternate way to establish a data session and avoid unnecessary repeated attempts to authenticate AN.

When authentication fails with a network associated with a particular RAT, it may in some scenarios be advantageous to attempt a data connection on a network of a different RAT instead of a network of the same RAT. In an EVDO + EUTRAN (LTE) + UTRAN (UMTS) + GERAN (GSM) + CDMA 1x coverage for example, if the terminal fails to authenticate with the EVDO network, it may fall back to an attempt to attach with the EUTRAN or UTRAN or GERAN network or authenticate with the CDMA 1x network. As will be appreciated, additional EVDO networks discovered over the air may share the same authentication entity as the EVDO network initially discovered. The probability of failing authentication is higher when re-trying authentication with EVDO networks that may share the same authentication entity than attempting a data connection on a network with an alternative radio access technology (RAT) which has a different authentication entity. Moreover, the retry interval mandated by a particular RAT may further delay data session setup.

Thus, if failing data authentication on a network of one RAT, a further attempt can be made on a second network of a different RAT that may be associated with the original network, but has a different authentication entity. The first network and the second network may belong to the same wireless carrier, or they belong to different wireless carriers that they may have roaming agreements between each other. As a result, the two networks of different RATs may have some form of association between each other. For EVDO and CDMA 1x the association is through the Preferred Roaming List or Extended Preferred Roaming List as described in 3GPP2 C.S0016, or through the use of broadcast message "Alternative Technologies Information Message" as described in 3GPP2 C.S0005-E. EVDO is authenticated by AN-AAA while CDMA 1x data is authenticated by an AAA server, as described above. For EUTRAN and EVDO, the association is through broadcast messages such as SystemInformationBlockType8 of 3GPP TS 36.331 and E-UTRAN Neighbor List Record of 3GPP2 C.S0087, the contents of which are incorporated herein by reference. EUTRAN and EVDO are authenticated by home subscriber server (HSS) and AN-AAA respectively. For EUTRAN / UTRAN / GERAN, these may have different authentication entities but be associated by public land mobile network (PLMN). In addition, networks of different RATs may also be associated through the use of a provisioning message "multi-mode system selection (MMSS) system Priority List (MSPL)", as described in 3GPP2 C.S0016-D. Other ways of associating networks of different RATs will be known to those in the art.

The association between the first network and the second network may, in some cases, be that the first and second networks utilize different authentication entities, thus providing a higher probability of successful data connection on the second network if authentication fails on the first network. In other embodiments, the first network and the second network may be related by data speed. Thus the first network may be a higher speed data network and the second network may have a lower speed data connection. For example, the device may try to connect with an EUTRAN network first and then fall back to an UTRAN or GERAN network, or may attempt to connect with an EVDO network first and fall back to a CDMA 1x network to connect data.

Further, in one embodiment a first network with a higher data rate may be an overlay of the second network, the second network having a lower data rate and larger footprint than the first network. For example, the device may try to connect with an EUTRAN network first which has a smaller footprint and then fall back to an EVDO network which has a larger footprint due to the fact that it was introduced for a longer time.

The networks may utilize messages to define relationships between themselves. Such messages may include, for example, the broadcast or provisioning messages described above. In other cases, networks may utilize associations such as the PLMN. In further cases, networks may utilize Preferred Roaming List or Extended Preferred Roaming List for associations.

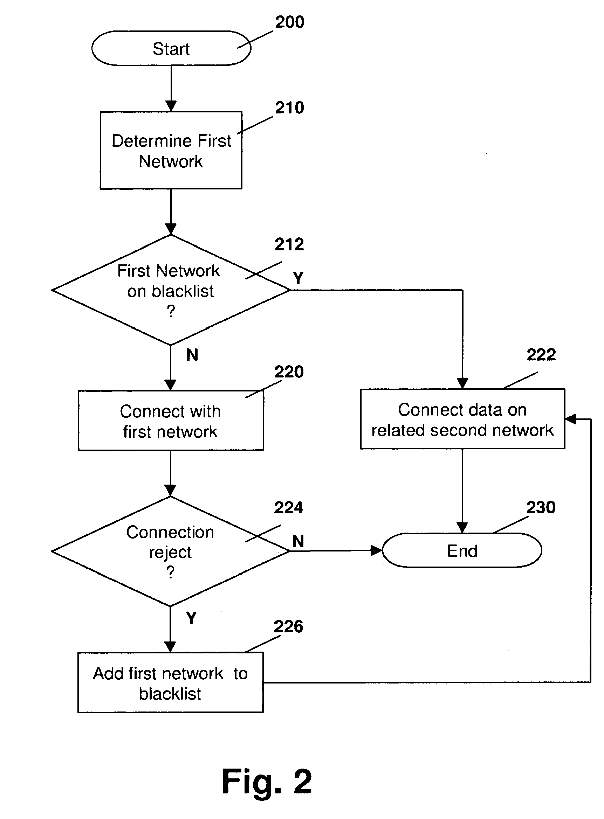

As will be appreciated by those in the art, a list may be maintained of the loss indication failures encountered. A general case is described with regards to **Figure 2****.**

Specifically, reference is now made to **Figure 2****,** which shows a process diagram for network connection in a multiple networks scenario.

Specifically, the process of **Figure 2** starts at block **200** and proceeds to block **210** in which the first network to connect to and authenticate with is determined. The determination of block **210** may be predefined. For example, a mobile device may wish to connect to an EUTRAN network first. Alternatively, the mobile device may prefer to connect to an EVDO network, for example.

The first network of block **210** may be any of the networks described above, such as EUTRAN, UTRAN, GERAN, EVDO, and CDMA 1x, among others. The first network may also be any other network the mobile device wishes to connect to.

From block **210,** the process proceeds to block **212** in which a determination is made of whether the first network is on a blacklist. If yes, the process proceeds to block **222** in which a data connection is established with a second network. As will be appreciated by those in the art, the second network may be any network related to the first network, and examples include an EVDO or UTRAN or GERAN or CDMA 1x as the second network when the first network is EUTRAN, CDMA 1x for the second network when the first network is EVDO, among other examples.

The connection in block **222** may also include checks to ensure the second network is not on a blacklist (not shown).

From block **222** the process proceeds to block **230** and ends.

If, in block **212,** it is determined that the first network is not on a blacklist, the process proceeds to block **220** in which a connection attempt is made to the first network. The process then proceeds to block **224** in which a check is made to determine whether the connection was authenticated.

From block **224,** if the connection was not rejected the process proceeds to block **230** and ends. If the connection was rejected, the process proceeds from block **224** to block **226** in which the first network is placed on the blacklist. The process then proceeds to block **222** to connect on the second network as described above.

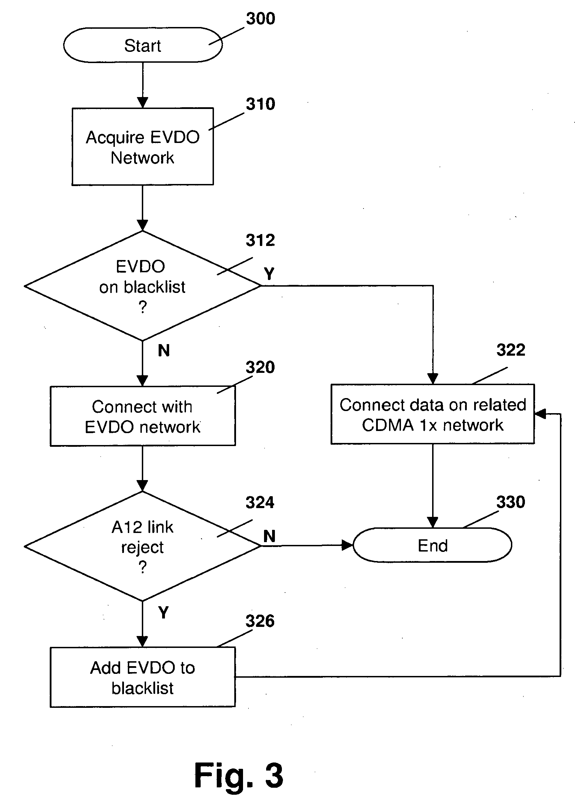

The process of **Figure 2** may be illustrated with regard to a hybrid EVDO / CDMA 1x coverage. Reference is now made to **Figure 3****.**

The process of **Figure 3** starts at block **300** and proceeds to block **310** in which the mobile determines which EVDO network to acquire and authenticate.

The process then proceeds to **312** in which a check is made to determine whether the EVDO network acquired is on a blacklist. The blacklist is explained in more detail below.

If, in block **312,** it is determined that the EVDO network is on a blacklist, the process proceeds to block **322** in which the mobile decides to authenticate a data session on a related CDMA 1x network. The process then proceeds to block **330** and ends. As will be appreciated by those in the art, if the EVDO network is on the blacklist, AN authentication with the EVDO network is likely to fail and thus an attempt to connect with the EVDO network is avoided and data is established over the related CDMA 1x network instead.

Conversely, if in block **312** the EVDO network is not on a blacklist, the process proceeds to block **320** in which the mobile attempts to setup an EVDO session and authenticate AN with the EVDO network.

From block **320** the process proceeds to block **324** in which a check is made to determine whether the AN authentication was accepted or rejected. If the AN authentication was rejected the process proceeds to block **326** in which the EVDO network is added to the blacklist and the process then proceeds to block **322** to connect to the related CDMA 1x network for the data session, as described above.

If, in block **324** it is determined that A12 authentication was successful the process proceeds to **330** and ends.

Based on **Figure 3** above, identifiers for EVDO networks are maintained on a blacklist for a time in order to avoid multiple attempts at establishing an EVDO session after an AN authentication rejection.

In a further embodiment, the addition of an EVDO network to the blacklist in block **326** may also involve the addition of associated EVDO networks to the blacklist. In particular, an EVDO network on a particular channel (e.g. channel x) can broadcast the existence of other EVDO networks (e.g. EVDO networks on channel y and z) through a SectorParameters message as described in 3GPP2 C.S0024. This can, for example use the ChannelCount / Channel field and NeighborChannellncluded / NeighborChannel field in the SectorParameters message. The information can thus be broadcast on a broadcast channel of the EVDO network.

In most of cases, EVDO networks on channel y and z from the example above will typically belong to the same carrier as EVDO network on channel x. The other EVDO networks will thus likely have similar authentication requirements.

If the device has attempted AN authentication on EVDO network on channel x and failed, in one embodiment the mobile device can proactively avoid scanning to and attempting AN authentication on EVDO networks on channel y and z because there is a high probability that AN authentication will also fail. This can be done through the addition of identifiers of EVDO network on channel x, but also identifiers of EVDO networks on channel y and channel z, to the blacklist in block **326.** The addition of identifiers of EVDO networks on channel y and channel z at the same time identifiers of EVDO network on channel x is added will prevent the system from attempting to connect to these EVDO networks in blocks **310** and **320,** thereby saving battery and network resources and potentially leading to a faster establishment of a data session on the CDMA 1 x network.

As will be appreciated, the use of three channels above is only meant for illustrative purposes, and the system could have any number of EVDO networks.

The addition of identifiers of associated networks of the same RAT to the blacklist could also be applied to any of the RATs described above. Identifiers of associated networks of the same RAT could be derived from information broadcasted on a broadcast channel. Other ways of adding associated networks of the same RAT to the blacklist would be known to those in the art.

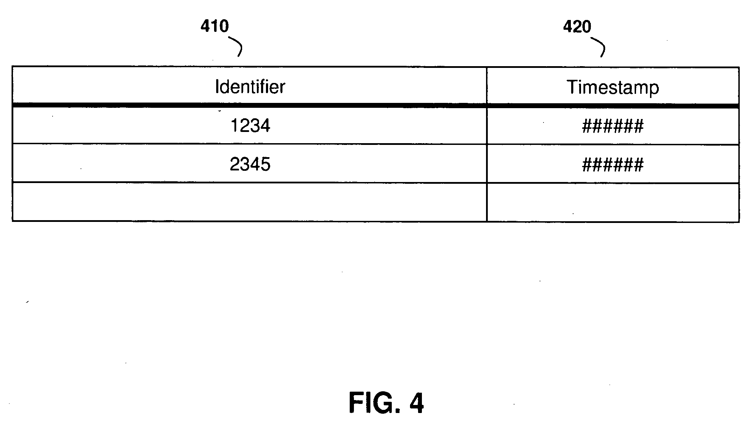

Reference is now made to **Figure 4. Figure 4** shows an exemplary blacklist that may be maintained by a mobile device. In particular, a blacklist of **Figure 4** shows two fields, namely the identifier field **410** and a timestamp field **420.**

The identifier field **410** identifies the network on the blacklist. Various ways to identify the network would be known to those in the art. For example, the identifier may be a subnet identifier for an EVDO network or may be a Location Area Identifier, Absolute Radio Frequency Channel Number (ARFCN), frequency band, Base Station Identity Code (BSIC), Public Land Mobile Network Identifier (PLMN ID), UTRA Absolute Radio Frequency Channel Number (UARFCN), Evolved Absolute Radio Frequency Channel Number (EARFCN), system identifier (SID), network identifier (NID), packet zone identifier (PZID) for other networks. Alternatively, an EVDO ColorCode may be utilized. The EVDO bandclass and channel number, in addition to EVDO subnet identifier or EVDO ColorCode, can also be used in adding associated EVDO networks to the blacklist. As will be appreciated, in order to shrink the subnet identifier to a smaller value, ColorCodes may be assigned to EVDO networks such that the EVDO networks with the same ColorCode are geographically spaced apart to avoid conflicts.

Other identifiers that would identify the network may also be used in identifier field **410.**

In the example of **Figure 4****,** a timestamp field **420** may also be utilized with the identifier. In one embodiment, it is desirable that the blacklisting of a network be temporary. In other words, the blacklisted ColorCode or identifier is not permanently placed on an avoidance list (blacklist). Temporary blacklisting provides for the possibility that error conditions may change in the future to allow access for the mobile device.

An example of such changes may be that roaming provisioning is granted to the visiting mobile device at a later date. In this case, a suitable timeout may be applied to automatically remove the ColorCode or identifier from the blacklist. In this regard, timestamp **420** may be utilized to identify when the network was placed in the blacklist of **Figure 4** (or alternatively the time the ColorCode or identifier should be removed). This would allow the mobile to check for a time duration that the identifier of a network has been in the blacklist and to delete it when the predetermined threshold for the time has been exceeded.

For example, in **Figure 4****,** network identifier 1234 may have a first timestamp and network identifier 2345 may have a second timestamp. If network identifier 1234 was placed into the blacklist first then the timestamp for the network will show this and the expiration of the predetermined time may be determined based on this timestamp. At the predetermined time, identifier 1234 is removed from the blacklist while network identifier 2345 is maintained in the blacklist until expiration of that identifier.

As will appreciated by those in art, in alternative embodiments the blacklist may include only identifier field **410.** In these embodiments, an alternative process to a timestamp may be utilized. For example, a timer may be started for each ColorCode or identifier or an interrupt may be set to cause the removal of the ColorCode or identifier. Other options would be known to those in the art.

In other embodiments, the list may also be cleared when the mobile device turns its radio off. For example, the list may be cleared when the mobile device goes into an airplane mode, is powered off, or the radio is turned off manually, among other scenarios. In this case the list may be cleared and when the radio is restored an attempt to establish a data session over the blacklisted network may be made.

As will be appreciated, a user that expects provisioning changes to be made may implement those provisioning changes on the mobile device immediately by turning off and on the radio, rather than being required to wait for a timeout. Thus, if a user is expecting to be allowed to use a data session while roaming then the user could turn off the radio of the mobile device and then turn the radio back on. The resulting clearing of the blacklist of **Figure 4** will allow the data session to be established over the blacklisted network that has now been provisioned.

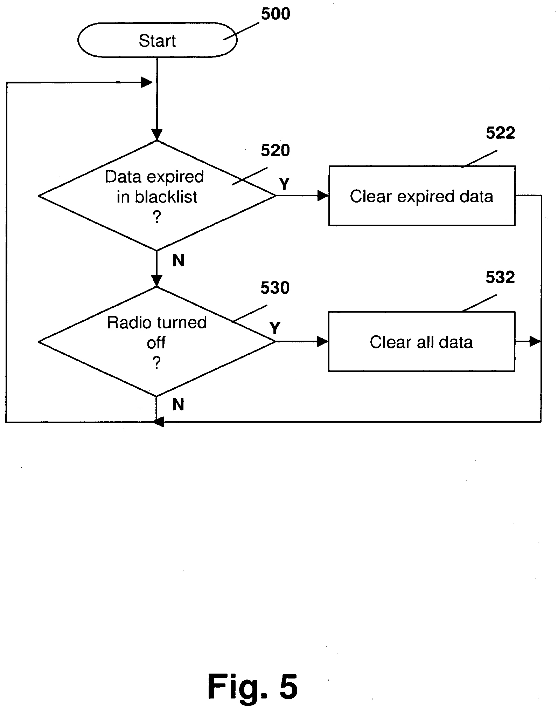

Reference is made to **Figure 5. Figure 5** shows the clearing of the entries in the blacklist of **Figure 4****.** The process of **Figure 5** starts at block **500** and proceeds to block **520** in which a check is made to determine whether data is expired in the blacklist. Such data is an identifier for a network or a ColorCode for an EVDO network.

If data has expired in the blacklist, the process proceeds from block **520** to block **522** in which the expired data is cleared. As indicated above, the non-expired data is retained in the blacklist.

From block **522,** the process proceeds back to block **520** to continue to check for expired data in the blacklist.

From block **520** if data has not expired in the blacklist, the process proceeds to block **530** in which a check is made to determine whether the radio has been turned off. If yes, then the process proceeds to block **532** in which all data in the blacklist is cleared. From block **532** the process proceeds back to block **520** to continue to check whether data has expired in the blacklist.

In block **530** if the radio has not been turned off the process proceeds back to block **520** to continue to check for expiration of data in the blacklist.

**Figures 2****,** **3****,** **4** and **5** provide for the establishment of a data session on a second network if the first network is either on a blacklist or if authentication fails, which results in the network being placed on the blacklist. For example, if an EVDO network is on the blacklist or if AN authentication fails, a data session is established on the related CDMA 1x network. The establishment of the data session on the related CDMA 1x network rather than repeated attempts to establish an EVDO data session allows for the data establishment to occur more quickly, thereby enhancing user experience and saving battery and over the air resources.

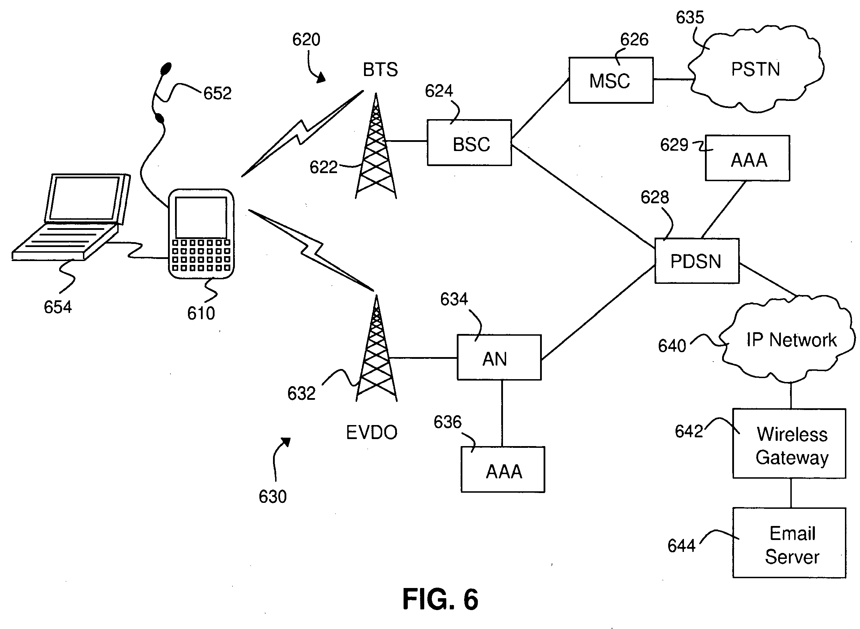

Reference is now made to **Figure 6. Figure 6** is a block diagram of an exemplary wireless data network in accordance with the present disclosure and with which the various embodiments of the methods of the present disclosure may cooperate. **Figure 6** shows a block diagram of a wireless data device **610** and exemplary CDMA 1x network **620,** an exemplary EVDO network **630,** a public switched telephone network (PSTN) **635,** an IP network **640,** wireless gateway **642** and e-mail server **644.** The wireless data device **610** is generally a two-way communication device having data and voice communication capabilities.

CDMA network **620** includes a base transceiver station (BTS) **622** and a base station controller (BSC) **624.** Base station controller **624** communicates with a mobile switching centre **626** which as will be appreciated, is a circuit switched only component communicating with PSTN **635.** Base station controller **624** further communicates with a packet data serving node (PDSN) **628** which is a packet switched only component. PDSN **628** further communicates with IP network **640.**

EVDO network **630** contains an EVDO sector **632,** which communicates with access node (AN) **634.** Since the EVDO network **630** is a data only network, access node **634** communicates only with PDSN **628** and not with any circuit switched components.

An authentication, authorization and accounting node **636** is associated with AN **634,** and a similar node **629** is associated with PDSN **628.** Other ANs may (not shown) be communicated with through PDSN **628** and IP network **640.** Such other ANs will have associated AAA nodes.

Operationally, hybrid access terminal (mobile device) **610** communicates wirelessly with CDMA network **620** using BTS **622** and BSC **624** to gain access to the services provided by the CDMA 1x network. Depending on the 1x and EVDO channel scanning sequences determined by the mobile device and the available 1x and EVDO networks over the air, in some cases CDMA 1x network is acquired first and the establishment of the CDMA network connection occurs prior to any EVDO network connection being established.

Mobile device **610** sends and receives both data and voice services through CDMA network **620** until an EVDO network connection is established. Base station controller **624** communicates with circuit switch services provided by MSC **626** such as voice and short message service (SMS) via PSTN **635.**

Prior to an EVDO connection being established, hybrid access terminal **610** further communicates wirelessly with BTS **622** and BSC **624** to gain access to packet data services provided by PDSN **628,** such as e-mail, wireless application protocol (WAP) and other data services via IP network **640.** Such services are provided through wireless gateway **642** and servers such as e-mail server **644.**

Once a network connection is established with CDMA 1x network **620** and the hybrid access terminal enters CDMA 1x idle state, wireless device **610** may attempt to establish a connection with EVDO network **630.** This is done through EVDO sector **632** and AN **634.** An authentication protocol as described above with regards to **Figure 1** may be performed.

In this way, mobile device **610** may gain access to packet data services provided by PDSN **628** using EVDO network **630.** Subsequent to the establishment of an EVDO network connection with mobile device **610,** CDMA network **620** is used to provide circuit switched services such as voice and SMS while EVDO network **630** is used to provide packet data services such as e-mail and WAP.

For the case when mobile device **610** acquires EVDO first, it may gain access to packet data services provided by PDSN **628** using EVDO network **630.** Once the hybrid access terminal enters EVDO idle state, the mobile device **610** may attempt to establish a connection with CDMA 1x network **620** for circuit switch services provided by MSC **626** such as voice and short message service (SMS) via PSTN **635.**

As will be appreciated by those skilled in the art, mobile device **610** can include voice communication means such as a headpiece **652** or a user can communicate directly into the mobile device **610.**

Mobile device **610** can also, in some cases, be used as a wireless modem and be connected through various means such as a USB or other serial port, or by short range wireless communications with a computer **654.** Computer **654** can then gain access to IP network **640** through EVDO network **630** using hybrid access terminal **610** as the modem.

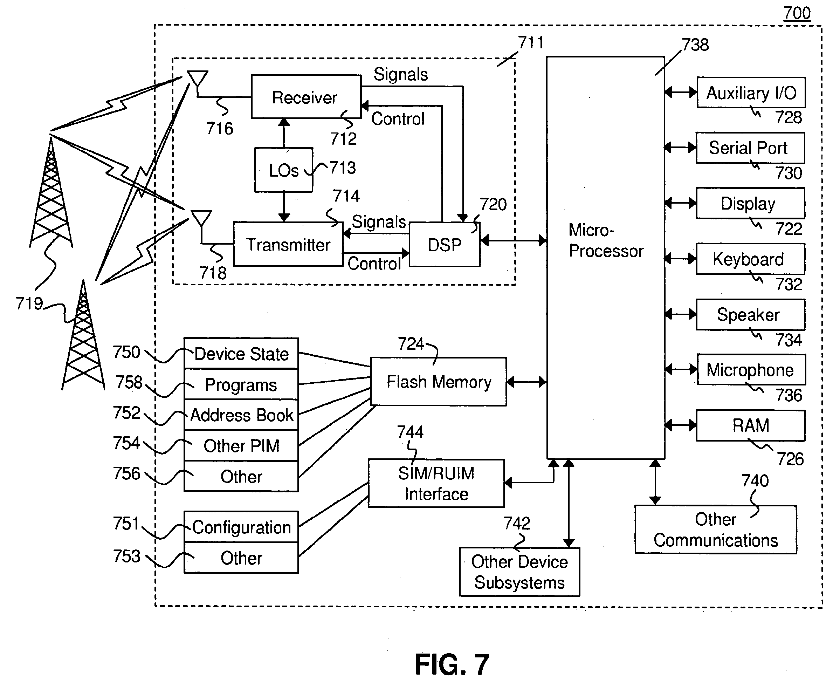

As will be appreciated, the above can be implemented on any mobile device. One exemplary mobile device is described below with reference to **Figure 7****.** This is not meant to be limiting, but is provided for illustrative purposes.

**Figure 7** is a block diagram illustrating a mobile device capable of being used with the embodiments of the apparatus and methods of the present disclosure. Mobile device **700** is typically a two-way wireless communication device having voice communication capabilities. Depending on the exact functionality provided, the mobile device may be referred to as a data messaging device, a two-way pager, a wireless e-mail device, a cellular telephone with data messaging capabilities, a wireless Internet appliance, a data communication device, a hybrid access terminal, or a wireless device, as examples.

Where mobile device **700** is enabled for two-way communication, it will incorporate a communication subsystem **711,** including both a receiver **712** and a transmitter **714,** as well as associated components such as one or more, embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** A mobile device may require a subscriber identity module (SIM) card or a removable user identity module (RUIM) in order to operate on the network. The SIM/RUIM interface **744** is generally similar to a card-slot into which a SIM/RUIM card can be inserted and ejected like a diskette or PCMCIA card. The SIM/RUIM card may hold key configuration **751,** and other information **753** such as identification, and subscriber related information.

When required network registration or activation procedures have been completed, mobile device **700** may send and receive communication signals over the network **719.** As illustrated in **Figure 7****,** network **719** can consist of multiple base stations communicating with the mobile device. For example, in a hybrid CDMA 1x / EVDO coverage, a CDMA base station and an EVDO base station communicate with the mobile device and the mobile device may be connected to both simultaneously. The EVDO and CDMA 1x base stations may use different paging slots to communicate with the mobile device.

Signals received by antenna **716** through communication network **719** are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile device **700** generally includes a processor **738** which controls the overall operation of the device. Communication functions, including data and voice communications, are performed through communication subsystem **711.** Processor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the processor **738** is generally stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and **756.** These different storage types indicate that each program can allocate a portion of flash memory **724** for their own data storage requirements. Processor **738,** in addition to its operating system functions, may enable execution of software applications on the mobile device. A predetermined set of applications that control basic operations, including data and voice communication applications for example, may typically be installed on mobile device **700** during manufacturing. Other applications could be installed subsequently or dynamically.

One software application may be a personal information manager (PIM) application having the ability to organize and manage data items relating to the user of the mobile device such as, but not limited to, e-mail, calendar events, voice mails, appointments, and task items. Naturally, one or more memory stores could be available on the mobile device to facilitate storage of PIM data items. Such PIM application would generally have the ability to send and receive data items, via the wireless network **719.** In one embodiment, the PIM data items are seamlessly integrated, synchronized and updated, via the wireless network **719,** with the mobile device user's corresponding data items stored or associated with a host computer system. Further applications may also be loaded onto the mobile device **700** through the network **719,** an auxiliary I/O subsystem **728,** serial port **730,** short-range communications subsystem **740** or any other suitable subsystem **742,** and installed by a user in the RAM **726** or a non-volatile store (not shown) for execution by the processor **738.** Such flexibility in application installation increases the functionality of the device and may provide enhanced on-device functions, communication-related functions, or both. For example, secure communication applications may enable electronic commerce functions and other such financial transactions to be performed using the mobile device **700.**

In a data communication mode, a received signal such as a text message or web page download may be processed by the communication subsystem **711** and input to the processor **738,** which may further process the received signal for element attributes for output to the display **722,** or alternatively to an auxiliary I/O device **728.**

A user of mobile device **700** may also compose data items such as email messages for example, using the keyboard **732,** which is, in one embodiment, a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile device **700** is similar, except that received signals could be output to a speaker **734** and signals for transmission could be generated by a microphone **736.** Alternative voice or audio I/O subsystems, such as a voice message recording subsystem, may also be implemented on mobile device **700.** Although voice or audio signal output is accomplished generally through the speaker **734,** display **722** may also be used to provide an indication of the identity of a calling party, the duration of a voice call, or other voice call related information for example.

Serial port **730** in **Figure 7** could be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices. Subsystem **740** may also be used for WiFi or WiMAX communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for data session establishment from a mobile device (610, 700) comprising:
checking whether an identifier for a first network is on a blacklist on the mobile device (212; 312);
if the first network identifier is not on the blacklist,
attempting to establish a data connection with the first network (220; 320);
if the attempting to establish a data connection is unsuccessful (224; 324) based on authentication:
adding (226; 326) the first network identifier to the blacklist, the adding including adding identifiers of associated networks of a same radio access technology as the first network to the blacklist, the identifiers of the associated networks being derived from broadcasted information received at the mobile device (610, 700); and
attempting (222; 322) data connection establishment with a second network, the second network having a different radio access technology from the first network, the first network and second network using different authentication entities, and the first network and second network being associated by utilizing at least one of a broadcast message, a provisioning message, a public land mobile network, a preferred roaming list and an extended preferred roaming list; and
if the first network identifier is on the blacklist, establishing a data connection with the second network (222; 322).

2. The method of claim 1, wherein the first network is a higher data throughput Radio Access Technology than the second network.

3. The method of claim 1 or claim 2, wherein the first network has a smaller footprint than the second network.

4. The method of any one of claims 1 to 3, wherein the first network is an Evolution Data Only (EVDO) network (630) and the second network is a Code Division Multiple Access (CDMA) 1x network (620).

5. The method of claim 4, further comprising adding the EVDO network identifier to the blacklist if the attempt to establish a data connection is unsuccessful (326).

6. The method of claim 5, wherein a data connection is established with the CDMA network (620) subsequent to the addition of the EVDO network identifier to the blacklist (322).

7. The method of claim 5 or claim 6, wherein the attempting to establish performs an AN authentication (320) and wherein the attempting to establish is unsuccessful if the AN authentication returns a rejection.

8. The method of any one of claims 5 to 7, wherein the adding the EVDO network identifier further comprises adding EVDO network identifiers for EVDO networks associated with a current EVDO network to the blacklist.

9. The method of any one of claims 1 to 8, wherein the first network identifier is at least one of an EVDO ColorCode, an EVDO subnet identifier, an EVDO bandclass, an EVDO channel number, a Location Area Identifier, an Absolute Radio Frequency Channel Number (ARFCN), a frequency band, a Base Station Identity Code (BSIC), a Public Land Mobile Network Identifier (PLMN ID), an UTRA Absolute Radio Frequency Channel Number (UARFCN), an Evolved Absolute Radio Frequency Channel Number (EARFCN), a system identifier (SID), a network identifier (NID) and a packet zone identifier (PZID).

10. The method of any one of claims 1 to 9, wherein the blacklist further contains a time value associated with the first network identifier, said time value being utilized for the expiration of the first network identifier on the blacklist.

11. The method of any one of claims 1 to 10, further comprising checking whether a radio of the mobile device (610, 700) has been turned off (530), and if the radio has been turned off clearing the blacklist of all entries (532).

12. A mobile device (700) configured for data session establishment with a network (719) comprising:
a communications subsystem (711); and
a processor (738),
wherein the mobile device (700) is adapted to perform the method of any one of claims 1 to 11.

## Patentansprüche

1. Verfahren zur Herstellung einer Datensitzung von einer mobilen Vorrichtung (610, 700), das aufweist:
Prüfen, ob ein Identifizierer für ein erstes Netzwerk auf einer schwarzen Liste auf der mobilen Vorrichtung (212; 312) ist;
wenn der erste Netzwerkidentifizierer nicht auf der schwarzen Liste ist,
Versuchen eines Herstellens einer Datenverbindung mit dem ersten Netzwerk (220; 320);
wenn das Versuchen eines Herstellens einer Datenverbindung nicht erfolgreich ist (224; 324) basierend auf einer Authentifizierung:
Hinzufügen (226; 326) des ersten Netzwerkidentifizierers zu der schwarzen Liste, wobei das Hinzufügen umfasst ein Hinzufügen von Identifizierern von assoziierten Netzwerken einer selben Funkzugangstechnologie wie das erste Netzwerk zu der schwarzen Liste, wobei die Identifizierer der assoziierten Netzwerke von Broadcast-Information abgeleitet werden, die an der mobilen Vorrichtung (610, 700) empfangen wird; und
Versuchen (222; 322) eines Herstellens einer Datenverbindung mit einem zweiten Netzwerk, wobei das zweite Netzwerk eine andere Funkzugangstechnologie als das erste Netzwerk hat,
wobei das erste Netzwerk und das zweite Netzwerk verschiedene Authentifizierungsentitäten verwenden, und das erste Netzwerk und das zweite Netzwerk assoziiert sind durch Verwenden zumindest eines aus einer Broadcast-Nachricht, einer Bereitstellungsnachricht, einem öffentlichen terrestrischen Mobilfunknetz, einer bevorzugten Roaming-Liste und einer erweiterten bevorzugten Roaming-Liste; und
wenn der erste Netzwerkidentifizierer auf der schwarzen Liste ist, Herstellen einer Datenverbindung mit dem zweiten Netzwerk (222; 322).

2. Das Verfahren gemäß Anspruch 1, wobei das erste Netzwerk eine Funkzugangstechnologie mit höherem Datendurchsatz ist als das zweite Netzwerk.

3. Das Verfahren gemäß Anspruch 1 oder Anspruch 2, wobei das erste Netzwerk einen kleineren Fußabdruck hat als das zweite Netzwerk.

4. Das Verfahren gemäß einem der Ansprüche 1 bis 3, wobei das erste Netzwerk ein EVDO(Evolution Data Only)-Netzwerk (630) ist und das zweite Netzwerk ein CDMA(Code Division Multiple Access)-1x-Netzwerk (620) ist.

5. Das Verfahren gemäß Anspruch 4, das weiter aufweist ein Hinzufügen des EVDO-Netzwerkidentifizierers zu der schwarzen Liste, wenn der Versuch zum Herstellen einer Datenverbindung nicht erfolgreich ist (326).

6. Das Verfahren gemäß Anspruch 5, wobei eine Datenverbindung mit dem CDMA-Netzwerk (620) hergestellt wird nach dem Hinzufügen des EVDO-Netzwerkidentifizierers zu der schwarzen Liste (322).

7. Das Verfahren gemäß Anspruch 5 oder Anspruch 6, wobei der Versuch zum Herstellen eine AN-Authentifizierung durchführt (320) und wobei der Versuch zum Herstellen nicht erfolgreich ist, wenn die AN-Authentifizierung eine Ablehnung zurückgibt.

8. Das Verfahren gemäß einem der Ansprüche 5 bis 7, wobei das Hinzufügen des EVDO-Netzwerkidentifizierers weiter aufweist ein Hinzufügen von EVDO-Netzwerkidentifizierern für EVDO-Netzwerke, die mit einem aktuellen EVDO-Netzwerk assoziiert sind, zu der schwarzen Liste.

9. Das Verfahren gemäß einem der Ansprüche 1 bis 8, wobei der erste Netzwerkidentifizierer zumindest einer ist aus einem EVDO-ColorCode, einem EVDO-Subnetz-Identifizierer, einer EVDO-Bandklasse, einer EVDO-Kanalnummer, einem Location Area Identifier, einer ARFCN (Absolute Radio Frequency Channel Number), einem Frequenzband, einem BSIC (Base Station Identity Code), einem PLMN ID (Public Land Mobile Network Identifier), einer UARFCN (UTRA Absolute Radio Frequency Channel Number), einer EARFCN (Evolved Absolute Radio Frequency Channel Number), einem Systemidentifizierer (SID - system identifier), einem Netzwerkidentifizierer (NID - network identifier) und einem Paketzonenidentifizierer (PZID - packet zone identifier).

10. Das Verfahren gemäß einem der Ansprüche 1 bis 9, wobei die schwarze Liste weiter einen Zeitwert enthält, der mit dem ersten Netzwerkidentifizierer assoziiert ist, wobei der Zeitwert für den Ablauf des ersten Netzwerkidentifizierers auf der schwarzen Liste verwendet wird.

11. Das Verfahren gemäß einem der Ansprüche 1 bis 10, das weiter ein Prüfen aufweist, ob ein Funk der mobilen Vorrichtung (610, 700) ausgeschaltet wurde (530), und wenn der Funk ausgeschaltet wurde, Löschen aller Einträge der schwarzen Liste (532).

12. Eine mobile Vorrichtung (700), die konfiguriert ist zur Herstellung einer Datensitzung mit einem Netzwerk (719), die aufweist:
ein Kommunikationsteilsystem (711); und
einen Prozessor (738),
wobei die mobile Vorrichtung (700) ausgebildet ist zum Durchführen des Verfahrens gemäß einem der Ansprüche 1 bis 11.

## Revendications

1. Procédé pour l'établissement de session de données à partir d'un dispositif mobile (610, 700), comprenant :
la vérification de si un identificateur pour un premier réseau est sur une liste noire sur le dispositif mobile (212 ; 312) ;
si le premier identificateur de réseau n'est pas sur la liste noire,
tenter d'établir une connexion de données avec le premier réseau (220 ; 320) ;
si la tentative d'établir une connexion de données ne réussit pas (224 ; 324) sur la base de l'authentification :
ajouter (226 ; 326) le premier identificateur de réseau à la liste noire, l'ajout incluant l'ajout d'identificateurs de réseaux associés d'une même technologie d'accès radio que le premier réseau à la liste noire, les identificateurs des réseaux associés étant dérivés d'informations diffusées reçues au niveau du dispositif mobile (610, 700) ; et
tenter (222 ; 322) l'établissement de connexion de données avec un second réseau, le second réseau ayant une technologie d'accès radio différente du premier réseau, le premier réseau et le second réseau utilisant des entités d'authentification différentes, et le premier réseau et le second réseau étant associés en utilisant au moins un parmi un message de diffusion, un message d'approvisionnement, un réseau mobile terrestre public, une liste d'itinérance préférée et une liste d'itinérance préférée étendue ; et
si le premier identificateur de réseau est sur la liste noire, établir une connexion de données avec le second réseau (222 ; 322).

2. Procédé selon la revendication 1, dans lequel le premier réseau est une Technologie d'accès radio de débit de données plus élevé que le second réseau.

3. Procédé selon la revendication 1 ou la revendication 2, dans lequel le premier réseau a une empreinte plus petite que le second réseau.

4. Procédé selon l'une quelconque des revendications 1 à 3, dans lequel le premier réseau est un réseau de Données d'évolution uniquement (EVDO pour Evolution Data Only) (630) et le second réseau est un réseau d'Accès multiple par répartition en code (CDMA pour Code Division Multiple Access) 1x (620).

5. Procédé selon la revendication 4, comprenant en outre l'ajout de l'identificateur de réseau EVDO à la liste noire si la tentative d'établir une connexion de données ne réussit pas (326).

6. Procédé selon la revendication 5, dans lequel une connexion de données est établie avec le réseau CDMA (620) à la suite de l'ajout de l'identificateur de réseau EVDO à la liste noire (322).

7. Procédé selon la revendication 5 ou la revendication 6, dans lequel la tentative d'établir effectue une authentification AN (320) et dans lequel la tentative d'établir ne réussit pas si l'authentification AN retourne un rejet.

8. Procédé selon l'une quelconque des revendications 5 à 7, dans lequel l'ajout de l'identificateur de réseau EVDO comprend en outre l'ajout d'identificateurs de réseau EVDO pour des réseaux EVDO associés à un réseau EVDO actuel à la liste noire.

9. Procédé selon l'une quelconque des revendications 1 à 8, dans lequel le premier identificateur de réseau est au moins un parmi un Code Couleur EVDO, un identificateur de sous-réseau EVDO, une classe de bande EVDO, un numéro de canal EVDO, un Identificateur de zone de localisation, un Numéro de canal de radiofréquence absolu (ARFCN pour Absolute Radio Frequency Channel Number), une bande de fréquences, un Code d'identité de station de base (BSIC pour Base Station Identity Code), un Identificateur de Réseau mobile terrestre public (PLMN ID pour Public Land Mobile Network Identifier), un Numéro de canal de radiofréquence absolu UTRA (UARFCN pour UTRA Absolute Radio Frequency Channel Number), un Numéro de canal de radiofréquence absolu évolué (EARFCN pour Evolved Absolute Radio Frequency Channel Number), un identificateur de système (SID), un identificateur de réseau (NID) et un identificateur de zone de paquets (PZID).

10. Procédé selon l'une quelconque des revendications 1 à 9, dans lequel la liste noire contient en outre une valeur de temps associée au premier identificateur de réseau, ladite valeur de temps étant utilisée pour l'expiration du premier identificateur de réseau sur la liste noire.

11. Procédé selon l'une quelconque des revendications 1 à 10, comprenant en outre la vérification de si une radio du dispositif mobile (610, 700) a été mise hors tension (530), et si la radio a été mise hors tension, débarrasser la liste noire de toutes les entrées (532).

12. Dispositif mobile (700) configuré pour l'établissement de session de données avec un réseau (719) comprenant :
un sous-système de communications (711) ; et
un processeur (738),
dans lequel le dispositif mobile (700) est adapté pour effectuer le procédé selon l'une quelconque des revendications 1 à 11.
